# EUROPÄISCHE PATENTSCHRIFT

(11) **EP 3 571 092 B1**
(45) Veröffentlichungstag und Bekanntmachung des Hinweises auf die Patenterteilung: **17.02.2021**
(21) Anmeldenummer: 17825230.0
(22) Anmeldetag: 22.12.2017
(51) Int. Cl.: B60R 3/02

(54) **TÜRMODUL ZUR ANORDNUNG IN EINER TÜRÖFFNUNG EINER WAND EINES WAGENKASTENS EINES SCHIENENFAHRZEUGS**
DOOR MODULE FOR ARRANGING IN A DOOR OPENING OF A WALL OF A WAGON BODY OF A RAIL VEHICLE
MODULE DE PORTE À AGENCER DANS UNE OUVERTURE DE PORTE D'UNE PAROI D'UNE CAISSE D'UN VÉHICULE FERROVIAIRE

(30) Priorität: 20.01.2017 DE 102017000497
(43) Veröffentlichungstag der Anmeldung: 27.11.2019
(73) Patentinhaber: Knorr-Bremse Gesellschaft mit beschränkter Haftung, 2340 Mödling (AT)
(72) Erfinder: TAZREITER, Andreas, 3340 Waidhofen a.d. Ybbs (AT); BURGSTALLER, Hubert, 3300 Amstetten (AT)
(74) Vertreter: Wiedemann, Markus
(86) Internationale Anmeldenummer: PCT/EP2017/084332
(87) Internationale Veröffentlichungsnummer: WO 2018/134027

(56) Entgegenhaltungen:
- EP-A1- 2 617 621
- WO-A1-2004/085222
- DE-A1-102014 113 569
- DE-A1-102014 203 049

## Beschreibung

### Stand der Technik

Die Erfindung geht aus von einem Türmodul zur Anordnung in einer Türöffnung einer Wand eines Wagenkastens eines Schienenfahrzeugs oder eines Schienenfahrzeugzugs gemäß dem Oberbegriff von Anspruch 1. Weiterhin betrifft die Erfindung auch ein Schienenfahrzeug oder einen Schienenfahrzeugzug mit wenigstens einem solchen Türmodul gemäß Anspruch 10.

Ein solches Türmodul ist beispielsweise aus DE 10 2014 203 049 A1 bekannt. Dort werden über eine elektronische Steuereinrichtung die Schiebetrittanordnung und die Türflügel automatisch gesteuert.

Beispielsweise werden solche Schiebetrittanordnungen bei Fahrzeugen zur Personenbeförderung eingesetzt, um den Zu- und Ausstieg zu erleichtern und um eine Gefährdung von Personen zu vermeiden. Dabei kann der Schiebetritt mit Hilfe eines Antriebs zwischen einer eingefahrenen Position (Ruhestellung) und einer ausgefahrenen Position (Arbeitsstellung) hin- und her bewegt werden kann und ist hierzu beispielsweise an zwei parallel zueinander angeordneten Schienen der Führungseinrichtung geführt. Üblicherweise geschieht die Führung des Schiebetritts über Rollen.

Beispielsweise bei einem Schienenfahrzeug dient der Schiebetritt der Schiebetrittanordnung zur Überbrückung des Spalts zwischen dem Schienenfahrzeug und einem Bahnsteig, wenn das Schienenfahrzeug in einem Bahnhof hält. Damit wird verhindert, dass Passagiere in den betreffenden Spalt hineintreten. Auch kann der Schiebetritt bei Omnibussen dazu dienen, den Spalt zwischen Fahrzeug und einer Bordsteinkante abzudecken. Der Schiebetritt kann auch dazu dienen, einen Niveauunterschied zwischen einer Plattform des Fahrzeugs und dem Bahnsteig oder Gehsteig zu überbrücken, um einen Zu- und Ausstieg mit Rollstühlen und Kinderwagen zu erleichtern. Nicht zuletzt kann eine solche Schiebetrittanordnung auch bei Fahrzeugen zur Beförderung von kranken oder behinderten Personen eingesetzt werden, etwa, um durch den ausgefahrenen Schiebetritt einen Fahrweg für eine fahrbare Krankentrage oder einen Rollstuhl zwischen einer Fahrzeugplattform und einer Straße oder einem Gehweg zu bilden. Der Schiebetritt bildet daher in der ausgefahrenen Position eine begehbare Fläche zwischen Fahrzeug und Bahnsteig und dient als Einstiegshilfe für Personen beim Betreten bzw. Verlassen des Fahrzeugs.

Dabei gelangt der Schiebetritt je nach der Positionierung am Wagenkasten zumeist gegen Ende seiner Ausfahrbewegung z.B. in den Bereich eines Bahnsteigs, eines Bordsteins oder eines anderen Hindernisses und es besteht dabei die Gefahr, dass er seitlich in die vertikal verlaufende Bahnsteigwand bzw. Bordsteinwand fährt.

Daher werden beim Stand der Technik die Ausfahrweite des beweglichen Schiebetritts auf zwei typische Arten ermittelt und gesteuert. Zum einen durch ein Ausfahren des Schiebetritts bis er ein Hindernis, z.B. einen Bahnsteig oder Bordstein berührt und diese Berührung mit dem Hindernis ein Signal eines taktilen Sensors auslöst, z.B. mittels Messung des Motorstroms des Antriebsmotors des Schiebetritts oder zum andern durch berührungslos arbeitende Sensoren, beispielsweise durch am Fahrzeug angebrachte Abstands-Messsensoren.

Ein Beispiel für eine Bahnsteigerkennungseinrichtung durch taktile Sensoren wird z.B. in DE 10 2008 961 852 B4 beschrieben. Die dortige Bahnsteigerkennungseinrichtung weist einen als Stromdetektor ausgebildeten Sensor auf, der so ausgebildet ist, dass er einen Bahnsteig aufgrund einer erhöhten aufzubringenden Leistung bei Berührung des Bahnsteigs durch den Schiebetritt erfasst und ein Erfassungssignal an eine Steuerung der Schiebetritt-Antriebseinrichtung übermittelt. Die Steuerung stoppt dann den Schiebetritt, bevor dieser seine vollständig ausgefahrene Position erreichen kann.

Ebenfalls gemäß DE 10 2008 061 852 B4 ist die Schiebetritt-Antriebseinrichtung, derart ausgebildet, dass die von der Schiebetritt-Antriebseinrichtung abgebbare Leistung in einem ersten Abschnitt des Ausfahrwegs des Schiebetritts höher ist als in einem nachfolgenden zweiten Abschnitt. Damit soll ein kraftvolles Anfahren des Schiebetritts erzielt und anhaftendes Eis, Schnee oder Harsch gebrochen werden, um ein Blockieren des Schiebetritts durch Umwelteinflüsse zu vermeiden.

Bei Fahrzeugen mit automatisiert betriebenen Türen und Schiebetritten wie z.B. für den Personentransport eingesetzten Fahrzeugen werden der Lauf des Schiebetritts und der Lauf des oder der Türflügel in der Regel so gesteuert, dass die der Lauf des Schiebetritts und des oder der Türflügel entweder mit voller technisch sinnvoller Geschwindigkeit betrieben wird oder diese Komponenten still stehen, was abgesehen von gesteuerten Beschleunigungs- oder Bremsphasen ("Beschleunigungsrampe", "Bremsrampe") einer quasi digitalen Betriebsweise entspricht.

Die Koordination von Tür- und Schiebetrittbewegung erfolgt dabei derart, dass der Schiebetritt seine vorgesehene Endlage bereits erreicht hat, bevor der Türflügel oder die Türflügel eine lichte Öffnungsweite von mehr als 400 mm erreicht hat/haben. Dies ergibt sich aus den Anforderungen aus der für Schienenfahrzeugtüren maßgeblichen Norm EN 14752: 2015 Abs. 5.2.2.2: "Tür- und Trittbewegungen müssen so aufeinander abgestimmt sein, dass die Tür nicht mehr als 400 mm geöffnet ist, solange der Tritt nicht vollständig ausgefahren ist." Unter "vollständig ausgefahren" wird hier die situationsabhängige Ausfahrweite verstanden, die abhängig von der gerade vorliegenden Geometrie zwischen Schienenfahrzeug und Bahnsteig auch kleiner als die maximal mögliche Ausfahrweite des Schiebetritts sein kann. Weiterhin bedeutet dies, dass sich der Schiebetritt nicht mehr bewegen darf, wenn bereits eine lichte Öffnung des Türflügels oder der Türflügel größer als 400 mm vorhanden ist.

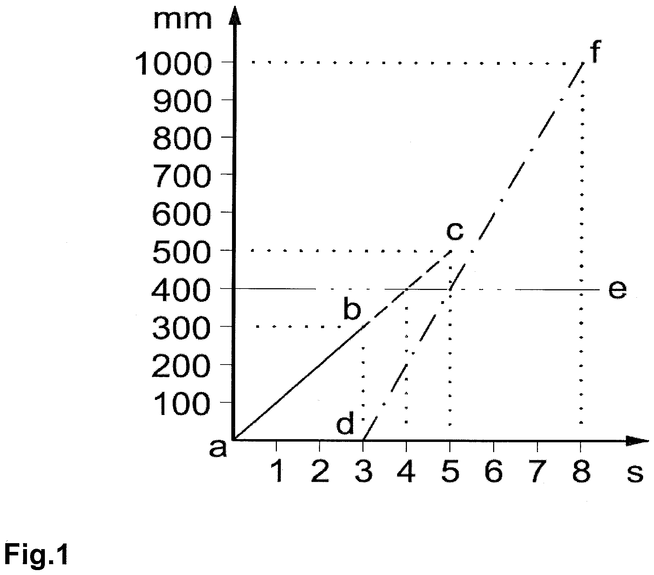

Unter Berücksichtigung der oben aufgeführten gesetzlichen Rahmenbedingungen ist in **Fig.1** die Koordination der Bewegung eines Türflügels einer Türe und der Bewegung eines Schiebetritts nach dem Stand der Technik in einem Diagramm gezeigt, in welchem die lichte Weite der durch den Türflügel frei gegebenen Türöffnung (in strichpunktierter Linie) und der Ausfahrweg des Schiebetritts (in durchgezogener bzw. gestrichelter Linie) gegenüber der Zeit t dargestellt sind. Vorhanden ist eine Bahnsteigerkennungseinrichtung mit einem Sensor, welcher einen Kontakt des Schiebetritts mit dem Bahnsteig erfasst und dann eine weitere Ausfahrbewegung des Schiebetritts verhindert. Die beim Kontakt mit dem Bahnsteig eingenommene Position des Schiebetritts stellt dann die Endposition des Schiebetritts dar, selbst wenn in dieser die Ausfahrweite kleiner als eine maximal mögliche Ausfahrweite c des Schiebetritts ist.

Der Schiebetritt soll hier in einem Zahlenbeispiel beispielsweise eine maximale Ausfahrweite von 500 mm im Punkt c aufweisen sowie eine Höchstgeschwindigkeit von 100 mm/s. Die hier beispielsweise einflügelige Schiebetür soll einen maximalen Betätigungshub von 1000 mm im Punkt f aufweisen (Weg von der Türflügel-Schließposition bis Türflügel-Öffnungsposition und zurück) sowie eine Höchstgeschwindigkeit von 200 mm/s. Der Bahnsteig sei hier beispielsweise 300 mm vom Schienenfahrzeug entfernt.

Zum Zeitpunkt t= 0 startet auf ein Signal hin die Ausfahrbewegung des Schiebetritts im Punkt a, welcher dann nach hier 3 Sekunden im Punkt b eine Ausfahrweite von 300 mm erreicht hat, welche hier kleiner als die maximal mögliche Ausfahrweite im Punkt c = 500 mm ist, weil durch den Sensor erkannt wurde, dass der Schiebetritt bereits bei der Ausfahrweite von 300 mm im Punkt b den Bahnsteig berührt hat.

Erst zum Zeitpunkt t = 3s, in welchem der Schiebetritt die Kontakt-Ausfahrweite von 300 mm erreicht hat, startet die Öffnungsbewegung des Türflügels ausgehend von der Schließposition im Punkt d, wobei dann zum Zeitpunkt t = 5s an der Linie e eine durch den Türflügel frei gegebene lichte Öffnung von 400 mm vorhanden ist. Daher wird die oben genannte Norm EN 14752: 2015 Abs. 5.2.2.2 erfüllt, wonach der Türflügel nicht mehr als 400 mm geöffnet sein darf, solange der Schiebetritt nicht vollständig ausgefahren ist. Nach 8 Sekunden erreicht der Türflügel dann seine volle Öffnungsposition im Punkt f.

Eine Steuerung der Bewegung des Schiebetritts und des Türflügels nach dem Stand der Technik startet daher zunächst die Bewegung des Schiebetritts und 3 Sekunden später die Bewegung des Türflügels, um eine maximale Öffnungsweite des Türflügels von 400 mm bei noch nicht vollständig ausgefahrenen und still stehenden Schiebetritt einzuhalten. Die Ausfahrzeit beträgt somit 3 Sekunden für die Bewegung des Schiebetritts plus 5 Sekunden für die Bewegung des Türflügels, also insgesamt 8 Sekunden für das Ausfahren des Schiebetritts und das vollständige Freigeben der Türöffnung durch den Türflügel.

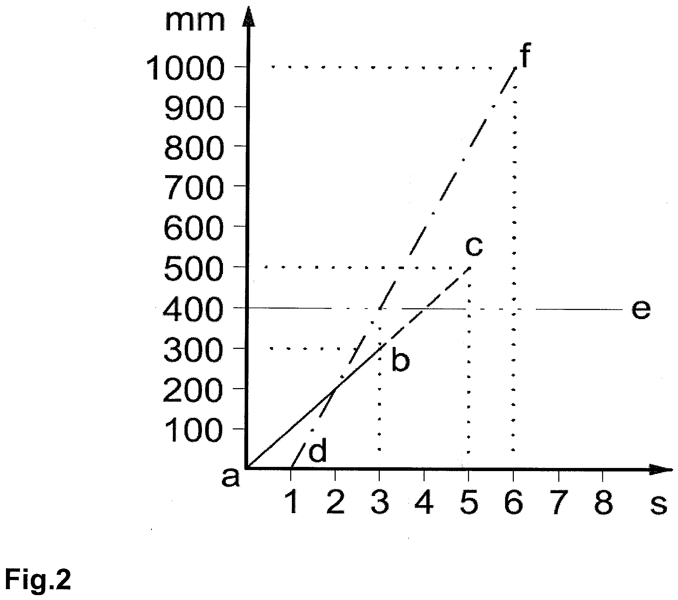

In **Fig.2** ist eine weitere Koordination der Bewegung eines Türflügels einer Türe und der Bewegung eines Schiebetritts nach dem Stand der Technik in einem Diagramm gezeigt, in welchem die lichte Weite der durch den Türflügel frei gegebenen Türöffnung (in strichpunktierter Linie) und der Ausfahrweg des Schiebetritts (in durchgezogener bzw. gestrichelter Linie) gegenüber der Zeit t dargestellt sind. Hier wird mittels eines berührungslos arbeitenden Abstandssensors, welcher den Abstand des Fahrzeugs vom Bahnsteig ermittelt, eine vorgesehene Ausfahrweite b des Schiebetritts berechnet, um einen zulässigen Restspalt zwischen Schiebetritt und Bahnsteig zu gewährleisten. Die vorgesehene Ausfahrweite des Schiebetritts im Punkt b ist hier daher kleiner als eine maximal mögliche Ausfahrweite im Punkt c.

Die Bewegung des Türflügels wird nun parallel zur Bewegung des Schiebetritts so gesteuert, dass die zulässige Öffnungsweite von 400 mm gemäß oben erläuterter EN 14752 dann erreicht ist, wenn der Schiebetritt seine vorgesehene Ausfahrweite im Punkt b erreicht hat.

Bezogen auf **Fig.2** startet zum Zeitpunkt t = 0 auf ein Türöffnungssignal hin die Ausfahrbewegung des Schiebetritts am Punkt a, welcher dann nach hier 3 Sekunden seine vorgesehene Ausfahrweite im Punkt b erreichen wird. Die Bewegung des Türflügels wird im Punkt d eine Sekunde nach dem Start der Bewegung des Schiebetritts gestartet, wobei der Türflügel nach weiteren 2 Sekunden 400 mm Öffnungsweite an der Linie e erreicht hat. Nach weiteren 3 Sekunden erreicht der Türflügel die vollständige Öffnungsposition im Punkt f. Die Gesamtzeit für das vollständige Ausfahren des Schiebetritts und das vollständige Öffnen des Türflügels beträgt somit 6 Sekunden.

Der vorliegenden Erfindung liegt demgegenüber die Aufgabe zugrunde, ein Türmodul für ein Schienenfahrzeug der eingangs erwähnten Art derart weiter zu bilden, dass bei Einhaltung der gesetzlichen Rahmenbedingungen die benötigte Gesamtzeit für das vorgesehene Ausfahren des Schiebetritts und das vollständige Öffnen des Türflügels reduziert wird. Gleichfalls soll auch ein Schienenfahrzeug mit einem solchen Türmodul zur Verfügung gestellt werden.

Diese Aufgabe wird erfindungsgemäß durch die Merkmale der Ansprüche 1 und 10 gelöst. Vorteilhafte Weiterbildungen der Erfindung sind Gegenstand der beigefügten Unteransprüche.

### Offenbarung der Erfindung

Die Erfindung geht von einem Türmodul zur Anordnung in einer Türöffnung einer Wand eines Wagenkastens eines Schienenfahrzeugs, mit
a) wenigstens einem gegenüber einer Türöffnung eines Türportals beweglichen Türflügel, welcher mit Hilfe einer Türflügel-Antriebseinrichtung zwischen einer Türflügel-Schließposition und einer Türflügel-Öffnungsposition beweglich ist, wobei zwischen der Türflügel-Schließposition und der Türflügel-Öffnungsposition eine Türflügel-Grenzöffnungsposition liegt, in welcher durch den wenigstens einen Türflügel eine vorgegebene lichte Weite der Türöffnung freigegeben wird,
b) einer Schiebetrittanordnung zur Überbrückung eines Spalts zwischen dem Schienenfahrzeug und einem Bahnsteig, welche einen mit Hilfe einer Schiebetritt-Antriebseinrichtung entlang eines Schiebetrittfahrwegs zwischen einer eingefahrenen Ausgangsposition und einer ausgefahrenen Endposition beweglich geführten Schiebetritt umfasst,
c) einer Bahnsteigerkennungseinrichtung, welche ausgebildet ist, dass sie
   c1) gemäß einer ersten Art im Laufe der Bewegung des Schiebetritts von der eingefahrenen Position in Richtung auf die ausgefahrene Position eine Berührung eines freien Endes des Schiebetritts oder eines mit dem Schiebetritt mitgeführten taktilen Elements mit dem Bahnsteig erfasst und daraufhin ein Erfassungssignal erzeugt, oder dass sie
   c2) gemäß einer zweiten Art den Abstand zwischen dem Schiebetritt in der eingefahrenen Ausgangsposition und dem Bahnsteig unabhängig von der Position des Schiebetritts berührungslos erfasst und ein den erfassten Abstand repräsentierendes Abstandssignal erzeugt,
d) einer elektronischen Steuereinrichtung, welche die Türflügel-Antriebseinrichtung und die Schiebetritt-Antriebseinrichtung derart steuert oder regelt, dass auf ein in die elektronische Steuereinrichtung eingesteuertes Türöffnungssignal hin der Türflügel von der Türflügel-Schließposition in die Türflügel-Öffnungsposition und abhängig von dem Erfassungssignal oder abhängig von dem Abstandssignal der Schiebetritt von der eingefahrenen Ausgangsposition in Richtung auf die ausgefahrene Position bewegt wird.

Daher wird der Schiebetritt mit Hilfe der Schiebetritt-Antriebseinrichtung zwischen der eingefahrenen Ausgangsposition (Ruhestellung) und der vollständig ausgefahrenen Endposition (Arbeitsstellung) hin- und her bewegt, kann aber auch an einer beliebigen, zwischen der eingefahrenen Ausgangsposition (Ruhestellung) und der vollständig ausgefahrenen Endposition gelegenen, dann vorgesehenen ausgefahrenen Endposition Endposition (Arbeitsstellung) gestoppt und dort gehalten werden, insbesondere dann, wenn ein Bahnsteig einen Abstand von dem Schienenfahrzeug aufweist, welcher geringer als der maximale Ausfahrweg des Schiebetritts ist. Wie eingangs bereits erwähnt, hat der Schiebetritt in der vorgesehenen ausgefahrenen Endposition eine situationsabhängige Ausfahrweite zurückgelegt, die abhängig von dem gerade vorliegenden Abstand zwischen dem Schienenfahrzeug bzw. einer Stirnfläche des Schiebetritts und dem jeweiligen Bahnsteig ist und auch kleiner als die maximal mögliche Ausfahrweite des Schiebetritts sein kann. In der eingefahrenen Ausgangsposition ist der Schiebetritt beispielsweise vollständig in einer Schiebetrittkassette aufgenommen, welche beispielsweise am Türmodul befestigt, am Wagenkasten des Schienenfahrzeugs angeordnet ist.

Der Einsatz des Türmoduls ist in einem Schienenfahrzeug, worunter ein spurgebundenes Fahrzeug zu verstehen ist, wie etwa eine Lokomotive, ein Triebzug, ein Triebwagen, eine Straßenbahn, ein U-Bahnfahrzeug, ein Waggon wie ein Personen- bzw. Reisezug und/oder Güterwagen, insbesondere ein Hochgeschwindigkeits-Schienenfahrzeug.

Das Türportal beinhaltet wenigstens einen beweglichen Türflügel. Folglich können lediglich ein einziger Türflügel oder auch zwei Türflügel oder auch noch mehr Türflügel vorgesehen sein, welche die Türöffnung des Türportals verschließen oder teilweise oder vollständig öffnen können. In der Türflügel-Schließposition ist die Türöffnung vollständig verschlossen und in der Türflügel-Öffnungsposition vollständig geöffnet. Zwischen der Türflügel-Schließposition und der Türflügel-Öffnungsposition liegt die Türflügel-Grenzöffnungsposition, welche im Hinblick auf die eingangs genannte Norm EN 14752: 2015 Abs. 5.2.2.2 eine lichte Weite der Türöffnung von beispielsweise 400 mm freigibt. Alternativ kann in der Türflügel-Grenzöffnungsposition jede andere beliebige lichte Weite der Türöffnung vorgegeben sein, welche auf der Basis einer Vorschrift oder Norm beruht.

Die Erfindung ist dann dadurch gekennzeichnet, dass
d1) für den Fall, dass die Bahnsteigerfassungseinrichtung gemäß der ersten Art ausgebildet ist, die elektronische Steuereinrichtung die Türflügel-Antriebseinrichtung und die Schiebetritt-Antriebseinrichtung auf das Türöffnungssignal hin derart steuert oder regelt, dass die Bewegung des wenigstens einen Türflügels in Richtung auf die Türflügel-Öffnungsposition zusammen mit der Bewegung des Schiebetritts in Richtung der ausgefahrenen Endposition gestartet und das Erfassungssignal erzeugt wird bevor die Türflügel-Grenzöffnungsposition durch den wenigstens einen Türflügel eingenommen wird, und dass dann der wenigstens eine Türflügel in seine Türflügel-Öffnungsposition bewegt wird, oder dass
d2) für den Fall, dass die Bahnsteigerfassungseinrichtung gemäß der zweiten Art ausgebildet ist, die elektronische Steuereinrichtung aus dem Abstandssignal eine vorgesehene ausgefahrene Endposition des Schiebetritts bestimmt und die Türflügel-Antriebseinrichtung und die Schiebetritt-Antriebseinrichtung auf das Türöffnungssignal hin derart steuert oder regelt, dass die Bewegung des wenigstens einen Türflügels in Richtung Türflügel-Öffnungsposition zusammen mit der Bewegung des Schiebetritts in Richtung der vorgesehenen ausgefahrenen Endposition gestartet wird und die Türflügel-Grenzöffnungsposition durch den wenigstens einen Türflügel und die vorgesehene ausgefahrene Endposition durch den Schiebetritt gleichzeitig eingenommen werden, und dass dann der wenigstens eine Türflügel in seine Türflügel-Öffnungsposition bewegt wird.

Damit einerseits bei einer Bahnsteigerfassungseinrichtung erster Art das Erfassungssignal erzeugt werden kann bevor die Türflügel-Grenzöffnungsposition durch den wenigstens einen Türflügel eingenommen wird, d.h. dass mit anderen Worten der Türflügel nicht zu schnell geöffnet und der Schiebetritt nicht zu langsam ausgefahren werden, werden beispielsweise durch Versuche entsprechende Geschwindigkeiten für den Schiebetritt und den Türflügel ermittelt, damit diese Bedingung eintreten kann und diese Geschwindigkeiten beispielsweise in einem Kennfeld abgelegt.

Damit andererseits bei einer Bahnsteigerfassungseinrichtung zweiter Art die Bewegung des wenigstens einen Türflügels in Richtung Türflügel-Öffnungsposition zusammen mit der Bewegung des Schiebetritts in Richtung der vorgesehenen ausgefahrenen Endposition gestartet und die Türflügel-Grenzöffnungsposition durch den wenigstens einen Türflügel und die vorgesehene ausgefahrene Endposition durch den Schiebetritt gleichzeitig eingenommen werden kann, findet in der elektronischen Steuereinrichtung eine entsprechende Berechnung der Geschwindigkeiten von Türflügel und Schiebetritt statt.

Im Gegensatz zum eingangs genannten Stand der Technik wird daher in beiden Fällen, nämlich mit einer Bahnsteigerfassungseinrichtung erster Art (berührungsbehaftete Erfassung des Abstands zum Bahnsteig bzw. Kontakt des Schiebetritts mit dem Bahnsteig) einerseits und mit einer Bahnsteigerfassungseinrichtung zweiter Art (berührungslose Erfassung des Abstands zum Bahnsteig) andererseits auf das Türöffnungssignal hin bereits die Bewegung des wenigstens einen Türflügels in Richtung Türflügel-Öffnungsposition zusammen mit der Bewegung des Schiebetritts in Richtung der vorgesehenen ausgefahrenen Endposition gestartet, so dass der wenigstens eine Türflügel bereits ein Stück weit in Richtung der Türflügel-Öffnungsposition gefahren ist und folglich bereits einen gewissen Anteil der gesamten lichten Weite der Türöffnung freigibt, welche aber zunächst noch unterhalb der lichten Weite der Türöffnung in der vorgegebenen Türflügel-Grenzöffnungsposition von beispielsweise 400mm liegt. Damit hat der wenigstens eine Türflügel weniger verbleibenden Öffnungsweg bis zur Türflügel--Öffnungsposition zurückzulegen, welcher erst dann zurückgelegt wird, wenn der Schiebetritt seine vorgesehene ausgefahrene Endposition bereits erreicht hat, welche durch den jeweiligen Abstand des Schienenfahrzeugs vom jeweiligen Bahnsteig bestimmt wird. Damit wird der eingangs genannten Norm EN 14752: 2015 Abs. 5.2.2.2 Rechnung getragen, wonach der Türflügel nicht mehr als 400 mm geöffnet sein darf, solange der Schiebetritt nicht vollständig ausgefahren ist.

Durch das erfindungsgemäße Türmodul wird bei einem Halt des Schienenfahrzeugs an einem Bahnsteig die Öffnungs- und Schließzeit des wenigstens einen Türflügels daher in Abhängigkeit von dem jeweils vorliegenden Abstand zum Bahnsteig verbessert und ein flüssigerer Türlauf zwischen der Türflügel-Schließposition und der Tür-Öffnungsposition gewährleistet, welcher insbesondere die Tot-Zeit zwischen der für den Schienenfahrzeugbetreiber nutzbaren Fahrzeit des Schienenfahrzeugs und der erforderlichen Passagierwechselzeit am Bahnsteig auf ein Minimum verkürzt. Für die Passagiere werden daher bei einem Halt des Schienenfahrzeugs am Bahnsteig Wartezeiten, in denen der Schiebetritt zwar bereits ausfährt aber der Türflügel mit dem Öffnen noch nicht begonnen hat, oder ein Stocken der Bewegung des Türflügels bis der Schiebetritt seine vorgesehene ausgefahrene Endposition erreicht hat, vermieden.

Durch die Unteransprüche sind vorteilhafte Weiterbildungen der in Anspruch 1 angegebenen Erfindung möglich.

Besonders bevorzugt ist vorgesehen, dass
a) für den Fall, dass die Bahnsteigerfassungseinrichtung gemäß der ersten Art ausgebildet ist, die elektronische Steuereinrichtung die Türflügel-Antriebseinrichtung und die Schiebetritt-Antriebseinrichtung auf das Türöffnungssignal hin derart steuert oder regelt, dass die Bewegung des wenigstens einen Türflügels in Richtung Türflügel- Öffnungsposition zusammen mit der Bewegung des Schiebetritts in Richtung der ausgefahrenen Endposition gestartet und das Erfassungssignal erzeugt wird bevor die Türflügel-Grenzöffnungsposition durch den wenigstens einen Türflügel mit einer ersten Türflügelgeschwindigkeit eingenommen wird, und dass dann der wenigstens eine Türflügel in seine Türflügel-Öffnungsposition mit einer zweiten Türflügelgeschwindigkeit bewegt wird, oder dass
b) für den Fall, dass die Bahnsteigerfassungseinrichtung gemäß der zweiten Art ausgebildet ist, die elektronische Steuereinrichtung aus dem Abstandssignal die vorgesehene ausgefahrene Endposition des Schiebetritts bestimmt und die Türflügel-Antriebseinrichtung und die Schiebetritt-Antriebseinrichtung auf das Türöffnungssignal hin derart steuert oder regelt, dass die Bewegung des wenigstens einen Türflügels in Richtung Türflügel-Öffnungsposition zusammen mit der Bewegung des Schiebetritts in Richtung der vorgesehenen ausgefahrenen Endposition gestartet wird und die Türflügel-Grenzöffnungsposition mit einer ersten Türflügelgeschwindigkeit durch den wenigstens einen Türflügel und die vorgesehene ausgefahrene Endposition durch den Schiebetritt gleichzeitig eingenommen werden, und dass dann der wenigstens eine Türflügel in seine Türflügel-Öffnungsposition mit einer zweiten Türflügelgeschwindigkeit bewegt wird, wobei
c) die zweite Türflügelgeschwindigkeit größer als die erste Türflügelgeschwindigkeit ist.

Insbesondere stellt die zweite Türflügelgeschwindigkeit eine Höchstgeschwindigkeit des wenigstens einen Türflügels dar.

Mit anderen Worten wird in beiden obigen Fällen a) und b) der wenigstens eine Türflügel, wenn der Schiebetritt bereits seine vorgesehene ausgefahrene Endposition mit der ersten Türflügelgeschwindigkeit eingenommen hat, dann mit der zweiten, gegenüber der ersten Türflügelgeschwindigkeit höheren Türflügelgeschwindigkeit bis zur Türflügel-Schließposition bewegt. Diese zweite Türflügelgeschwindigkeit ist beispielsweise die Höchstgeschwindigkeit, mit welcher der wenigstens eine Türflügel bewegt werden kann, so dass diese Maßnahme zum Erzielen einer minimalen Öffnungszeit des wenigstens einen Türflügel und damit auch einer kurzen Passagierwechselzeit beiträgt.

Gemäß einer bevorzugten Weiterbildung weist bei einer Bahnsteigerfassungseinrichtung der ersten Art das mit dem Schiebetritt mitgeführte taktile Element wenigstens einen am Schiebetritt drehbar gelagerte Leiste oder einen Hebel auf, welche oder welcher beim Kontakt mit dem Bahnsteig gedreht und die Drehbewegung mittels eines Sensorelements erfasst wird, welcher daraufhin das Erfassungssignal aussteuert.

Alternativ oder zusätzlich hierzu kann bei einer Bahnsteigerfassungseinrichtung der ersten Art ein Kontakt des Schiebetritts oder eines mit ihm mitgeführten taktilen Elements mit dem Bahnsteig abhängig von einer Änderung wenigstens einer der folgenden Größen erfasst werden: Der von einer elektrischen Antriebsmaschine der Schiebetritt-Antriebseinrichtung verbrauchte Strom, die Winkelgeschwindigkeit eines Rotors der elektrischen Antriebsmaschine, ein Vergleich von Weg-Zeit-Abschnitten des ausfahrenden Schiebetritts. Dies kann beispielsweise durch eine Kennfeldauswertung z.B. als Motorstrom-Anstieg, Motor-Winkelgeschwindigkeitsänderung (Abbremsung) oder als Vergleich von Weg-Zeit-Abschnitten des ausfahrenden Schiebetritts erfolgen.

Gemäß einer bevorzugten Weiterbildung bestimmt bei einer Bahnsteigerfassungseinrichtung der zweiten Art die elektronische Steuereinrichtung aus dem den erfassten Abstand repräsentierenden Abstandssignal die vorgesehene ausgefahrene Endposition des Schiebetritts derart, dass die vorgesehene ausgefahrene Endposition des Schiebetritts einer Position entspricht, in welcher der Schiebtritt den erfassten Abstand des Schiebetritts vom Bahnsteig überbrückt.

Gemäß einer Weiterbildung ist eine an dem Wagenkasten befestigbaren Schiebetrittkassette oder ein an dem Wagenkasten befestigbares Schiebetrittgestell vorgesehen, an welcher/welchem der Schiebetritt geführt und in Bezug zu welcher/welchem der Schiebetritt ein- und ausfahrbar ist. Die Schiebetrittkassette kann insbesondere auch eine eine Schiebetrittkassettenöffnung, in oder aus welcher der Schiebetritt ein- oder ausfährt, verschließende Schiebetrittklappe aufweisen, welche bei vollständig eingefahrenem Schiebetritt die Schiebetrittkassettenöffnung zum Schutz vor Verschmutzung verschließt und beim Ausfahren des Schiebetritts aus der Schiebetrittkassette aufklappt.

Wie oben bereits erwähnt, kann in der Türflügel-Grenzöffnungsposition die durch den wenigstens einen Türflügel freigegebene lichte Weite der Türöffnung auf der Basis einer Vorschrift oder einer Norm vorgegeben sein und beispielsweise 400 mm betragen.

Weiterhin können ein einziger Türflügel (einflügeliges Türmodul) oder zwei Türflügel (zweiflügeliges Türmodul) vorgesehen sein, wobei die zwei Türflügel zum Schließen der Türöffnung aufeinander zu und zum Freigeben der Türöffnung voneinander weg laufen.

Die Erfindung betrifft auch ein Schienenfahrzeug oder einen Schienenfahrzeugzug mit wenigstens einem oben beschriebenen Türmodul.

### Zeichnung

Die Erfindung wird nachstehend anhand von Ausführungsbeispielen unter Bezugnahme auf die beigefügte Zeichnung näher beschrieben. Es zeigen:
- Fig.3: eine Seitenansicht eines Schienenfahrzeugs mit Türmoduln gemäß einer ersten Ausführungsform der Erfindung;
- Fig.4: eine Vorderansicht eines Türmoduls von Fig.1 gemäß einer ersten Ausführungsform;
- Fig.5: eine stark schematisierte Seitenansicht des Türmoduls von Fig.4 mit einer Schiebetrittanordnung mit einem Schiebetritt;
- Fig.6: eine stark schematisierte Seitenansicht des Türmoduls von Fig.4 mit ausgefahrenem Schiebetritt;
- Fig.7: eine vergrößerte Seitenansicht des Türmoduls von Fig.4 mit ausgefahrenem Schiebetritt;
- Fig.8: ein Diagramm, in welchem die lichte Weite der Öffnung des Türflügels und der Ausfahrweg des Schiebetritts gegenüber der Zeit t bei dem Türmodul gemäß der ersten Ausführungsform dargestellt sind;
- Fig.9: ein Diagramm, in welchem die lichte Weite der Öffnung des Türflügels und der Ausfahrweg des Schiebetritts gegenüber der Zeit t bei einem Türmodul gemäß einer zweiten Ausführungsform dargestellt sind.

### Beschreibung der Ausführungsbeispiele

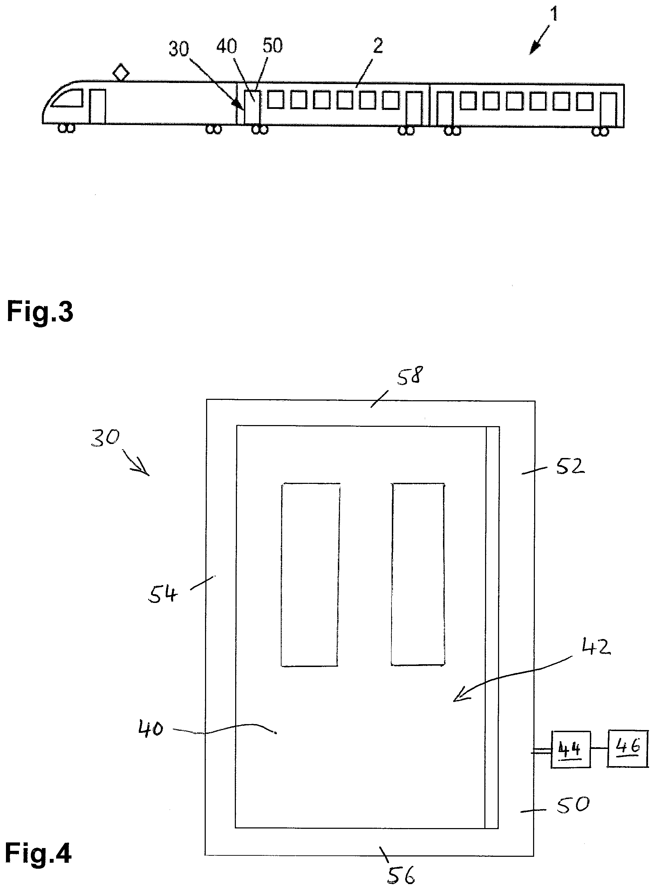

Der in **Fig.3** gezeigte Schienenfahrzeugzug 1 aus Lokomotive und einzelnen Wagen weist Türmodule 30 gemäß einer ersten Ausführungsform der Erfindung auf, wobei grundlegende Bauteile eines Türmoduls 30 am Beispiel des ersten Wagens erläutert werden. Diese Bauteile sind aber auch an einem Türmodul 30 der Lokomotive und an den Türmoduln 30 der weiteren Wagen zu finden.

Der erste Wagen, welcher per se ein Schienenfahrzeug für Personenbeförderung darstellt, umfasst eine Außenwand 2 und mehrere Türmodule 30, welche jeweils beispielsweise einen einzigen Türflügel 40, ein Türportal 50 und ein elastisch verformbares Dichtungselement 60 als Türdichtung umfassen. Alternativ können aber auch mehr als nur ein Türflügel vorhanden sein wie beispielsweise bei einer zweiflügeligen Türe.

Gemäß **Fig.4** umfasst das Türportal 50 zwei vertikal angeordnete Holme 52, 54 und zwei horizontal angeordnete Holme 56, 58, wobei der Türflügel 40 relativ zum Türportal 50 zwischen einer Türflügel-Schließposition und einer Türflügel-Öffnungsposition mittels einer Türflügel-Antriebseinrichtung 44 motorisch angetrieben wird, um eine Türöffnung 42 zum Ein- und Aussteigen von Fahrgästen im Stillstand z.B. an einem Bahnsteig zu öffnen bzw. zur Fahrt zu verschließen. Bei der Ausführungsform führt der Türflügel 40 gegenüber dem Türportal 50 beispielsweise eine rein lineare Verschiebebewegung aus. Die Türflügel-Antriebseinrichtung 44 wird hierzu von einer elektronischen Steuereinrichtung 46 gesteuert, alternativ geregelt.

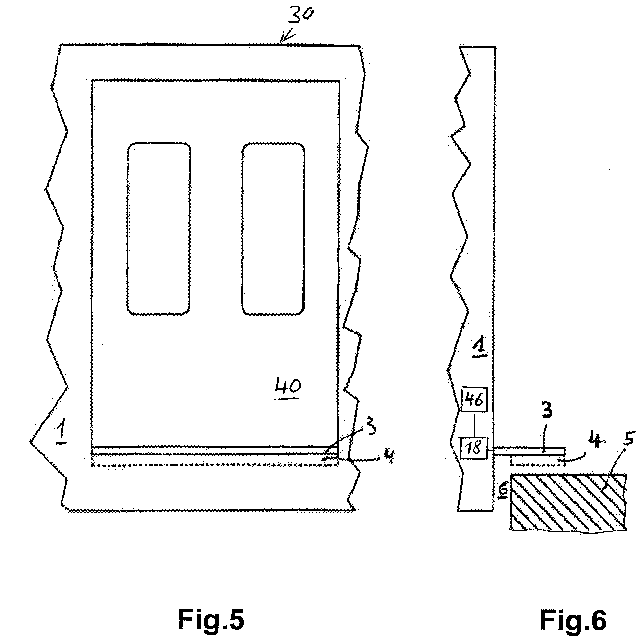

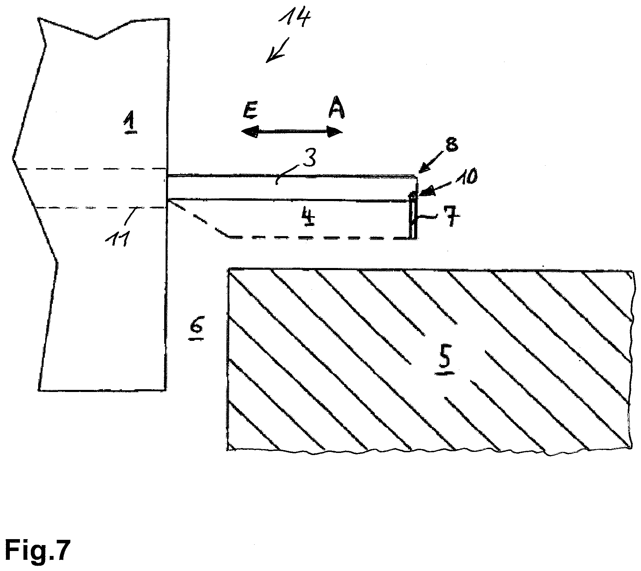

**Fig.5** zeigt eine Schiebetrittanordnung 14 des Türmoduls 30 mit einem Schiebetritt 3. Unterhalb der Schiebetritts 3 ist mit gestrichelten Linien ein Erfassungsraum 4 dargestellt, d.h. ein Raum, der von einer Bahnsteigerfassungseinrichtung 8 des Türmoduls 30 während des Ausfahrens des Schiebetritts 3 aus einer in **Fig.7** angedeuteten Schiebetrittkassette 11 auf Kollisions- bzw. Einklemmgefahr überwacht werden soll. Die Positionierung und Bedeutung dieses Erfassungsraums 4 wird aus einer Zusammenschau der **Fig.6** und **Fig.7** ersichtlich. Der Erfassungsraum 4 ist bevorzugt unterhalb des Schiebetritts 3 angeordnet.

In **Fig.6** und **Fig.7** ist weiterhin ein Bahnsteig 5 eingezeichnet, wie er bezüglich des Schienenfahrzeugs 1 mit seiner Oberfläche und seiner Seitenwand verläuft. Zwischen dem Bahnsteig 5 und dem Schienenfahrzeug 1 besteht ein Spalt 6, welcher in manchen Fällen, z.B. bei Bahnsteigen mit gebogenen Gleisabschnitten auch breiter als im gezeigten Ausführungsbeispiel sein kann und zu dessen gefahrloser Überwindung durch Personen der Schiebetritt 3 vorgesehen ist.

Der Schiebetritt 3 ist an der Schiebetrittkassette 11 durch eine hier nicht gezeigte Schiebetrittführungseinrichtung geführt, um in Bezug auf die Schiebetrittkassette 10 zwischen einer eingefahrenen Position und einer ausgefahrenen Position bewegt werden zu können. Insbesondere kann der Schiebetritt 3 durch die Schiebetrittführungseinrichtung entlang eines geraden oder gebogenen Schiebetrittfahrwegs geführt sein.

Die Schiebetrittanordnung 14 weist daher den an der Schiebetrittkassette 11 entlang des Schiebetrittfahrwegs zwischen der eingefahrenen Position ("E" in **Fig.7**) und einer ausgefahrenen Endposition ("A" in **Fig.7**) beweglich geführten Schiebetritt 3 auf, welcher in der eingefahrenen Position in der Schiebetrittkassette 11 bevorzugt vollständig aufgenommen und mit Hilfe einer Schiebetritt-Antriebseinrichtung 18 aus der eingefahrenen Position durch eine Kassettenöffnung der Schiebetrittkassette 10 hindurch in eine ausgefahrene Endposition ausfahrbar und aus der mindestens einen ausgefahrenen Endposition in die eingefahrene Position einfahrbar ist.

An dem freien Ende des Schiebetritts 3 ist ein taktiles Element 7 beweglich gelagert, welcher einerseits Bestandteil der Schiebetrittanordnung 14 und andererseits der Bahnsteigerfassungseinrichtung 8 ist, wobei die Bahnsteigerfassungseinrichtung 8 eine Bahnsteigerfassungseinrichtung 8 erster Art und derart ausgebildet ist, dass bei einer Berührung des taktilen Elements 7 mit dem Bahnsteig 5 im Laufe der Ausfahrbewegung des Schiebetritts 3 von der eingefahrenen Position in eine ausgefahrene Position eine kritische Position des Schiebetritts 3 in Bezug auf den Bahnsteig 5 erkannt und bei einem solchen Erkennen ein Erfassungssignal erzeugt wird. Denn wie oben bereits beschrieben, stellen Hindernisse wie Bahnsteige 5 innerhalb des Erfassungsraums 4 unterhalb des Schiebetritts 3 und ein Stück weit vor der Stirnseite des Schiebetritts 3 eine kritische Situation dar, die es zu vermeiden gilt.

Bevorzugt wirkt dann die Bahnsteigerfassungseinrichtung 8 erster Art mit der Schiebetritt-Antriebseinrichtung 18 derart zusammen, dass nach einer Erzeugung des Erfassungssignals die Schiebetritt-Antriebseinrichtung 18 angesteuert wird, um den Schiebetritt 3 in einer in Bezug auf den Bahnsteig 5 unkritischen Position zu halten oder den Schiebetritt 3 in eine unkritische Position in Bezug zum Bahnsteig 5 zu bringen. Eine kritische Position des Schiebetritts 3 stellt wie oben beschrieben eine Position dar, in welcher eine Kollision des Schiebetritts mit der Oberfläche des Bahnsteigs 5 oder mit seiner Seitenwand droht oder zu erwarten ist. Eine unkritische Position des Schiebetritts 3 lässt hingegen keine Kollision des Schiebetritts 3 mit dem Bahnsteig 5 erwarten.

Die Steuerungen der Schiebetritt-Antriebseinrichtung 18 und der Bahnsteigerfassungseinrichtung 8 sind hier beispielsweise in der elektronischen Steuereinrichtung 46 der Türflügel-Antriebseinrichtung 44 integriert. Alternativ können auch jeweils eigene Steuereinrichtungen vorgesehen sein, welche miteinander kommunizieren.

Das taktile Element 7, z.B. in Form einer flächigen sich über die gesamte Breite des Schiebetritts erstreckenden Leiste ist hier beispielsweise über eine Drehlagerung am Schiebetritt 3 drehbar gelagert, wobei das taktile Element 7 nach dem Ausfahren des Schiebetritts 3 aus der Schiebetrittkassette 11 ohne Wirken von äußeren Kräften und nur aufgrund der Eigengewichtskräfte automatisch in eine Erfassungsposition schwenkt. Beim Einfahren des Schiebetritts 3 in die Schiebetrittkassette 10 wird das taktile Element 7 demgegenüber zwangsgeführt verschwenkt, um in der Schiebetrittkassette etwa parallel zum Schiebetritt 3 aufgenommen zu werden.

Die Bahnsteigerfassungseinrichtung 8 erster Art weist beispielsweise ein mit dem taktilen Element 7 gekoppeltes Sensorelement 10 auf, welches eine Bewegung bzw. ein Schwenken des taktilen Elements 7 infolge eines Kontakts mit dem Bahnsteig 5 erkennt. Beispielsweise misst das Sensorelement 10 den Drehwinkel zwischen dem taktilen Element 7 und dem Schiebetritt 3. Wenn dann dieser gemessene Drehwinkel einen vorgegebenen Grenzwinkel überschreitet, dann stellt dies ein Indiz für eine Kollision oder einen Kontakt des taktilen Elements 7 mit einem Bahnsteig 5 im Erfassungsraum 4 dar. Wird ein solcher Kontakt des taktilen Elements 7 mit dem Bahnsteig 5 festgestellt, so wird von der Bahnsteigerfassungseinrichtung 8 sofort ein Erfassungssignal erzeugt, durch welche infolge der elektronischen Steuereinrichtung 46 die Schiebetritt-Antriebseinrichtung 18 sofort gestoppt und der Schiebetritt 3 dann in der zuletzt erreichten ausgefahrenen Position belassen oder erforderlichenfalls sogar ein Stück weit in Richtung auf die eingefahrene Position zurückbewegt wird. Die zuletzt erreichte ausgefahrene Position bzw. die aus dieser ein Stück weit zurück gefahrene Position bildet dann die Endposition des Schiebetritts 3 in Bezug auf den vorliegenden Bahnsteig 5, deren Ausfahrweite unter Umständen kleiner ist als eine maximal mögliche Ausfahrweite des Schiebetritts 3 in der voll ausgefahrenen Endposition. Abhängig vom jeweiligen horizontalen und/oder vertikalen Abstand des Schienenfahrzeugs 1 vom Bahnsteig 5 ergibt sich daher eine jeweils andere Endposition des Schiebetritts 3, welche durch das Erzeugen des Erfassungssignals markiert wird.

Bei einem Halt des Schienenfahrzeugzuges 1 in einem Bahnhof befinden sich zunächst der Türflügel 40 in seiner Schließposition und der Schiebetritts in seiner eingefahrenen Ausgangsposition. Auf ein in die elektronische Steuereinrichtung 46 eingesteuertes Türöffnungssignal hin muss nun die Bewegung des Türflügels 40 mit der Bewegung des Schiebetritts 3 koordiniert werden, damit die oben genannte Norm EN 14752: 2015 Abs. 5.2.2.2 erfüllt wird, wonach der Türflügel 40 nicht mehr als 400 mm (Türflügel-Grenzöffnungsposition) geöffnet sein darf, solange der Schiebetritt 3 nicht vollständig ausgefahren ist.

Das Türöffnungssignal wird in der Regel durch eine Bedieneinrichtung am Türmodul 30 z.B. in Form eines Druckknopfes erzeugt und ist nur dann valide, wenn der Schienenfahrzeugzug steht bzw. wenn es der Zugführer freigegeben hat.

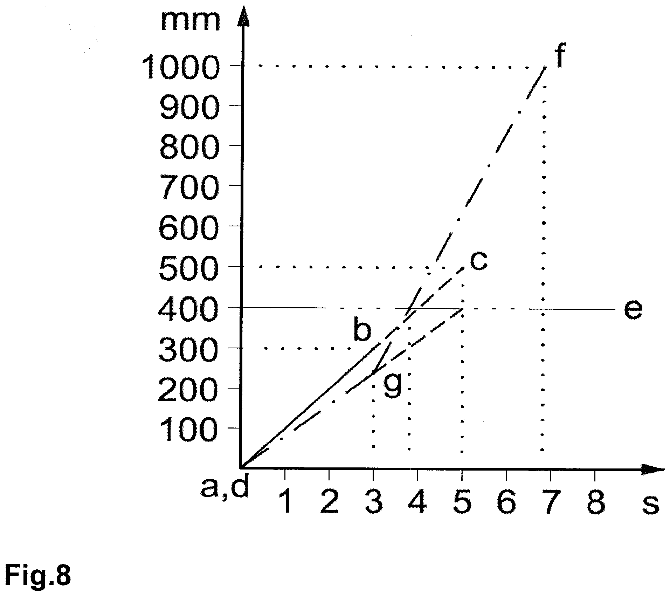

Zur Koordination der Bewegungen des Türflügels 40 und des Schiebetritts 3 steuert oder regelt die elektronische Steuereinrichtung 46 die Türflügel-Antriebseinrichtung 44 und die Schiebetritt-Antriebseinrichtung 18 derart, dass auf ein in die elektronische Steuereinrichtung 46 eingesteuertes Türöffnungssignal hin die Bewegung des Türflügels 40 in Richtung Türflügel-Öffnungsposition zusammen mit der Bewegung des Schiebetritts 3 in Richtung der ausgefahrenen Endposition gestartet und das Erfassungssignal erzeugt wird bevor die Türflügel-Grenzöffnungsposition von 400 mm durch den Türflügel 40 mit einer ersten Türflügelgeschwindigkeit eingenommen wird, und dass dann der Türflügel 40 in seine Türflügel-Öffnungsposition mit einer zweiten Türflügelgeschwindigkeit bewegt wird. Dieser Modus erster Art wird im Folgenden anhand von **Fig.8** anhand eines Zahlenbeispiels im Einzelnen beschrieben. **Fig.8** zeigt ein Diagramm, in welchem die lichte Weite der durch den Türflügel 40 frei gegebenen Türöffnung (in strichpunktierter Linie) und der Ausfahrweg des Schiebetritts 3 (in durchgezogener bzw. gestrichelter Linie) gegenüber der Zeit t dargestellt sind.

Der Schiebetritt 3 soll hier in dem Zahlenbeispiel beispielsweise eine maximale Ausfahrweite von 500 mm aufweisen sowie eine Höchstgeschwindigkeit von 100 mm/s. Der Türflügel 40 soll einen maximalen Betätigungshub von 1000 mm aufweisen (Weg von der Türflügel-Schließposition bis Türflügel-Öffnungsposition und zurück) sowie eine Höchstgeschwindigkeit von 200 mm/s. Der Bahnsteig 5 sei 300 mm vom Schienenfahrzeug entfernt.

In **Fig.8** startet am Punkt d die Bewegung des Türflügels 40 von der Türflügel-Schließposition in Richtung Türflügel-Öffnungsposition (Betätigungshub von 1000 mm im Punkt f) zusammen mit der Bewegung des Schiebetritts 3 am Punkt a in Richtung der maximal ausgefahrenen Endposition (Punkt c). Am Punkt b (Ausfahrweite des Schiebetritts = 300 mm) hat das taktile Element 7 aber den Bahnsteig 5 bereits berührt, so dass am Punkt b der Schiebetritt 3 seine ausgefahrene Endposition erreicht hat. Der Punkt c kennzeichnet daher lediglich die maximal mögliche Ausfahrweite des Schiebetritts 3 von 500 mm, welche hier aber nicht zum Tragen kommt.

Die Linie e kennzeichnet das Erreichen einer lichten Weite von 400 mm der Türöffnung durch den Türflügel 40, welche im Hinblick auf die oben angeführten Bestimmungen Bedeutung hat. Ab dem Punkt g wird der Türflügel 40 mit der Höchstgeschwindigkeit von 200 mm/s bewegt bis er den Punkt f erreicht (maximale lichte Weite der Türöffnung 42 von 1000 mm).

Bei dem Zahlenbeispiel von **Fig.8** wird der Türflügel 40 anfangs so gesteuert, dass sie die 400 mm lichte Weite der Türöffnung 42 in 5 Sekunden erreicht, also mit einer ersten Türflügelgeschwindigkeit von 400 mm/5 s = 80 mm/s. Der Schiebetritt 3 erreicht nach 3 Sekunden die Endposition im Punkt b, in welcher das taktile Element 7 auf den Bahnsteig 5 trifft. In der Zwischenzeit hat der Türflügel 40 im Parallelbetrieb bereits 240 mm zurückgelegt und benötigt für den restlichen Weg von 760 mm weitere 3,8 Sekunden. Die ab dem Punkt b bis zum Erreichen des Punkts f zurückgelegte Weg des Türflügels 40 von 760 mm legt dieser dann in 3,8 Sekunden zurück, so dass die zweite Türflügelgeschwindigkeit des Türflügels auf diesem Weg 760 mm/3,8 s = 200 mm/s also gleich Höchstgeschwindigkeit beträgt und damit größer ist als die erste Türflügelgeschwindigkeit.

Die Gesamtzeit, die der Türflügel 40 vom Punkt a bis zum Punkt f benötigt beträgt daher 3 Sekunden + 3,8 Sekunden = 6,8 Sekunden. Die Totzeit beim Ein- und Aussteigen wird deshalb gegenüber dem Stand der Technik nach **Fig.1** von 8 Sekunden auf 6,8 Sekunden reduziert.

Gemäß einer weiteren Ausführungsform des Türmoduls 30 ist die Bahnsteigerfassungseinrichtung 8 gemäß einer zweiten Art ausgebildet, dass sie den Abstand zwischen dem Schiebetritt 3 in der eingefahrenen Ausgangsposition und dem Bahnsteig 5 berührungslos erfasst und ein den erfassten Abstand repräsentierendes Abstandssignal erzeugt. Hierzu ist die Bahnsteigerfassungseinrichtung 8 beispielsweise mit einem entsprechenden berührungslos arbeitenden Sensor ausgestattet. Die Abstandserfassung erfolgt dabei insbesondere unabhängig von der Position des Schiebetritts 3. Dann bestimmt die elektronische Steuereinrichtung 46 aus dem Abstandssignal eine vorgesehene ausgefahrene Endposition des Schiebetritts 3, d.h. die Endposition des Schiebetritts 3, in welcher dieser den Bahnsteig 5 berührt oder gerade noch nicht berührt.

Dann steuert oder regelt die elektronische Steuereinrichtung 46 die Türflügel-Antriebseinrichtung 44 und die Schiebetritt-Antriebseinrichtung 18 auf das Türöffnungssignal hin allgemein derart, dass die Bewegung des Türflügels 40 in Richtung Türflügel-Öffnungsposition zusammen mit der Bewegung des Schiebetritts 3 in Richtung der vorgesehenen ausgefahrenen Endposition gestartet wird und die Türflügel-Grenzöffnungsposition von beispielsweise 400 mm mit einer ersten Türflügelgeschwindigkeit durch den Türflügel 40 und die vorgesehene ausgefahrene Endposition des Schiebetritts 3 durch den Schiebetritt 3 gleichzeitig eingenommen werden, und dass dann der Türflügel 40 in seine Türflügel-Öffnungsposition mit einer zweiten Türflügelgeschwindigkeit bewegt wird, wobei die zweite Türflügelgeschwindigkeit größer als die erste Türflügelgeschwindigkeit ist.

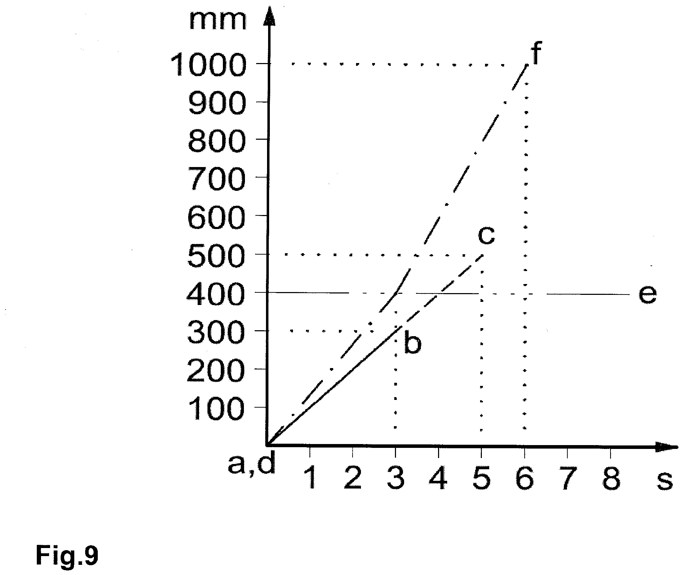

Dieser Modus zweiter Art wird im Folgenden anhand des Zahlenbeispiels von **Fig.9** im Einzelnen beschrieben. Die aus dem Abstandssignal berechnete ausgefahrene vorgesehene Endposition des Schiebetritts beträgt hier beispielsweise 300 mm, weil der Abstand des Bahnsteigs 5 vom Schienenfahrzeug 1 300 mm beträgt. **Fig.9** zeigt wiederum ein Diagramm, in welchem die lichte Weite der durch den Türflügel 40 frei gegebenen Türöffnung 42 (in strichpunktierter Linie) und der Ausfahrweg des Schiebetritts 3 (in durchgezogener bzw. gestrichelter Linie) gegenüber der Zeit t dargestellt sind.

In **Fig.9** startet am Punkt d wiederum die Bewegung des Türflügels 40 in Richtung Türflügel-Öffnungsposition (Punkt f) zusammen mit der Bewegung des Schiebetritts 3 in Punkt a in Richtung der ausgefahrenen vorhergesehenen Endposition (Punkt b), aber mit gegenüber der Höchstgeschwindigkeit von 200 mm/s derart reduzierter erster Türflügelgeschwindigkeit, dass 400 mm Öffnung an der Linie e gleichzeitig mit der ausgefahrenen vorgesehenen Endposition (Punkt b) des Schiebetritts 3 erreicht werden. Nach Erreichen der vorgesehenen Endposition (Punkt b) des Schiebetritts 3 von 300 mm Ausfahrweite bewegt sich der Türflügel 40 wie im Zahlenbeispiel von **Fig.8** mit der Höchstgeschwindigkeit des Türflügels 40 von 200 mm/s, welche dann die zweite Türflügelgeschwindigkeit darstellt bis zum Punkt f, welcher die maximale freigegebene lichte Weite von 1000 mm der Türöffnung 42 kennzeichnet. Es ergibt sich somit zwar die gleiche Gesamtöffnungszeit t = 6 Sekunden wie nach dem Stand der Technik gemäß **Fig.2****,** aber die Passagiere sehen unmittelbar nach dem Türöffnungssignal einen sich öffnenden Türflügel 40 statt einen zunächst nicht auf das Türöffnungssignal hin reagierenden Türflügel 40.

### Bezuqszeichenliste

- 1: Schienenfahrzeugzug
- 2: Außenwand
- 3: Schiebetritt
- 4: Erfassungsraum
- 5: Bahnsteig
- 6: Spalt
- 7: taktiles Element
- 8: Bahnsteigerfassungseinrichtung
- 10: Sensorelement
- 11: Schiebetrittkassette
- 14: Schiebetrittanordnung
- 18: Schiebetritt-Antriebseinrichtung
- 30: Türmodul
- 40: Türflügel
- 42: Türöffnung
- 44: Türflügel-Antriebseinrichtung
- 46: elektronische Steuereinrichtung
- 50: Türportal
- 52: vertikaler Holm
- 54: vertikaler Holm
- 56: horizontaler Holm
- 58: horizontaler Holm
- 60: Dichtungselement

## Patentansprüche

1. Türmodul (30) zur Anordnung in einer Türöffnung (42) einer Wand (2) eines Wagenkastens eines Schienenfahrzeugs oder eines Schienenfahrzeugzugs (1), mit
a) wenigstens einem gegenüber einer Türöffnung (42) eines Türportals (50) beweglichen Türflügel (40), welcher mit Hilfe einer Türflügel-Antriebseinrichtung (44) zwischen einer Türflügel-Schließposition und einer Türflügel-Öffnungsposition beweglich ist, wobei zwischen der Türflügel-Schließposition und der Türflügel-Öffnungsposition eine Türflügel-Grenzöffnungsposition liegt, in welcher durch den wenigstens einen Türflügel (40) eine vorgegebene lichte Weite der Türöffnung (42) freigegeben wird,
b) einer Schiebetrittanordnung (14) zur Überbrückung eines Spalts (6) zwischen dem Schienenfahrzeug (1) und einem Bahnsteig (5), welche einen mit Hilfe einer Schiebetritt-Antriebseinrichtung (18) entlang eines Schiebetrittfahrwegs zwischen einer eingefahrenen Ausgangsposition und einer ausgefahrenen Endposition beweglich geführten Schiebetritt (3) umfasst,
c) einer Bahnsteigerfassungseinrichtung (8), welche ausgebildet ist, dass sie
c1) gemäß einer ersten Art im Laufe der Bewegung des Schiebetritts (3) von der eingefahrenen Position in Richtung auf die ausgefahrene Position eine Berührung des Schiebetritts (3) oder eines mit dem Schiebetritt mitgeführten taktilen Elements (7) mit dem Bahnsteig (5) erfasst und daraufhin ein Erfassungssignal erzeugt, oder dass sie
c2) gemäß einer zweiten Art den Abstand zwischen dem Schiebetritt (3) in der eingefahrenen Ausgangsposition und dem Bahnsteig (5) unabhängig von der Position des Schiebetritts (3) berührungslos erfasst und ein den erfassten Abstand repräsentierendes Abstandssignal erzeugt,
d) einer elektronischen Steuereinrichtung (46), welche die Türflügel-Antriebseinrichtung (44) und die Schiebetritt-Antriebseinrichtung (18) derart steuert oder regelt, dass auf ein in die elektronische Steuereinrichtung (46) eingesteuertes Türöffnungssignal hin der Türflügel (40) von der Türflügel-Schließposition in die Türflügel-Öffnungsposition und abhängig von dem Erfassungssignal oder abhängig von dem Abstandssignal der Schiebetritt (3) von der eingefahrenen Ausgangsposition in Richtung auf die ausgefahrene Position bewegt wird, **dadurch gekennzeichnet, dass**
d1) für den Fall, dass die Bahnsteigerfassungseinrichtung (8) gemäß der ersten Art ausgebildet ist, die elektronische Steuereinrichtung (46) die Türflügel-Antriebseinrichtung (44) und die Schiebetritt-Antriebseinrichtung (18) auf das Türöffnungssignal hin derart steuert oder regelt, dass die Bewegung des wenigstens einen Türflügels (40) in Richtung auf die Türflügel-Öffnungsposition zusammen mit der Bewegung des Schiebetritts (3) in Richtung der ausgefahrenen Endposition gestartet und das Erfassungssignal erzeugt wird bevor die Türflügel-Grenzöffnungsposition durch den wenigstens einen Türflügel (40) eingenommen wird, und dass dann der wenigstens eine Türflügel (40) in seine Türflügel-Öffnungsposition bewegt wird, oder dass
d2) für den Fall, dass die Bahnsteigerfassungseinrichtung (8) gemäß der zweiten Art ausgebildet ist, die elektronische Steuereinrichtung (46) aus dem Abstandssignal eine vorgesehene ausgefahrene Endposition des Schiebetritts (3) bestimmt und die Türflügel-Antriebseinrichtung (44) und die Schiebetritt-Antriebseinrichtung (18) auf das Türöffnungssignal hin derart steuert oder regelt, dass die Bewegung des wenigstens einen Türflügels (40) in Richtung Türflügel-Öffnungsposition zusammen mit der Bewegung des Schiebetritts (3) in Richtung der vorgesehenen ausgefahrenen Endposition gestartet wird und die Türflügel-Grenzöffnungsposition durch den wenigstens einen Türflügel (40) und die vorgesehene ausgefahrene Endposition durch den Schiebetritt (3) gleichzeitig eingenommen werden, und dass dann der wenigstens eine Türflügel (40) in seine Türflügel-Öffnungsposition bewegt wird.

2. Türmodul nach Anspruch 1, **dadurch gekennzeichnet, dass**
a) für den Fall, dass die Bahnsteigerfassungseinrichtung (8) gemäß der ersten Art ausgebildet ist, die elektronische Steuereinrichtung (46) die Türflügel-Antriebseinrichtung (44) und die Schiebetritt-Antriebseinrichtung (18) auf das Türöffnungssignal hin derart steuert oder regelt, dass die Bewegung des wenigstens einen Türflügels (40) in Richtung Türflügel-Öffnungsposition zusammen mit der Bewegung des Schiebetritts (3) in Richtung der ausgefahrenen Endposition gestartet und das Erfassungssignal erzeugt wird bevor die Türflügel-Grenzöffnungsposition durch den wenigstens einen Türflügel (40) mit einer ersten Türflügelgeschwindigkeit eingenommen wird, und dass dann der wenigstens eine Türflügel (40) in seine Türflügel-Öffnungsposition mit einer zweiten Türflügelgeschwindigkeit bewegt wird, oder dass
b) für den Fall, dass die Bahnsteigerfassungseinrichtung (8) gemäß der zweiten Art ausgebildet ist, die elektronische Steuereinrichtung (46) aus dem Abstandssignal die vorgesehene ausgefahrene Endposition des Schiebetritts (3) bestimmt und die Türflügel-Antriebseinrichtung (44) und die Schiebetritt-Antriebseinrichtung (18) auf das Türöffnungssignal hin derart steuert oder regelt, dass die Bewegung des wenigstens einen Türflügels (40) in Richtung Türflügel-Öffnungsposition zusammen mit der Bewegung des Schiebetritts (3) in Richtung der vorgesehenen ausgefahrenen Endposition gestartet wird und die Türflügel-Grenzöffnungsposition mit einer ersten Türflügelgeschwindigkeit durch den wenigstens einen Türflügel (40) und die vorgesehene ausgefahrene Endposition durch den Schiebetritt (3) gleichzeitig eingenommen werden, und dass dann der wenigstens eine Türflügel (40) in seine Türflügel-Öffnungsposition mit einer zweiten Türflügelgeschwindigkeit bewegt wird, wobei
c) die zweite Türflügelgeschwindigkeit größer als die erste Türflügelgeschwindigkeit ist.

3. Türmodul nach Anspruch 2, **dadurch gekennzeichnet, dass** die zweite Türflügelgeschwindigkeit eine Höchstgeschwindigkeit des wenigstens einen Türflügels darstellt.

4. Türmodul nach einem der vorhergehenden Ansprüche, **dadurch gekennzeichnet, dass** bei einer Bahnsteigerfassungseinrichtung (8) der ersten Art das mit dem Schiebetritt (3) mitgeführte taktile Element (7) wenigstens einen/eine am Schiebetritt (3) drehbar gelagerte Leiste oder Hebel aufweist, welche oder welcher beim Kontakt mit dem Bahnsteig (5) gedreht und die Drehbewegung mittels eines Sensorelements (10) erfasst wird, welcher daraufhin das Erfassungssignal aussteuert.

5. Türmodul nach einem der vorhergehenden Ansprüche, **dadurch gekennzeichnet, dass** bei einer Bahnsteigerfassungseinrichtung (8) der ersten Art ein Kontakt des Schiebetritts (3) oder des mit ihm mitgeführten taktilen Elements (7) mit dem Bahnsteig (5) abhängig von einer Änderung wenigstens einer der folgenden Größen erfasst wird: Der von einer elektrischen Antriebsmaschine der Schiebetritt-Antriebseinrichtung (8) verbrauchte Strom, die Winkelgeschwindigkeit eines Rotors der elektrischen Antriebsmaschine, ein Vergleich von Weg-Zeit-Abschnitten des ausfahrenden Schiebetritts (3).

6. Türmodul nach einem der vorhergehenden Ansprüche, **dadurch gekennzeichnet, dass** bei einer Bahnsteigerfassungseinrichtung (8) der zweiten Art die elektronische Steuereinrichtung (46) aus dem den erfassten Abstand repräsentierenden Abstandssignal die vorgesehene ausgefahrene Endposition des Schiebetritts (3) derart bestimmt, dass die vorgesehene ausgefahrene Endposition des Schiebetritts (3) einer Position entspricht, in welcher der Schiebtritt (3) den erfassten Abstand des Schiebetritts vom Bahnsteig (5) überbrückt.

7. Türmodul nach einem der vorhergehenden Ansprüche, **dadurch gekennzeichnet, dass** in der Türflügel-Grenzöffnungsposition die durch den wenigstens einen Türflügel (40) freigegebene lichte Weite der Türöffnung (42) auf der Basis einer Vorschrift oder einer Norm vorgegeben ist.

8. Türmodul einem der vorhergehenden Ansprüche, **dadurch gekennzeichnet, dass** eine an dem Wagenkasten befestigbare Schiebetrittkassette (11) oder ein an dem Wagenkasten befestigbares Schiebetrittgestell vorgesehen ist, an welcher/welchem der Schiebetritt (3) geführt und in Bezug zu welcher/welchem der Schiebetritt (3) ein- und ausfahrbar ist.

9. Türmodul einem der vorhergehenden Ansprüche, **dadurch gekennzeichnet, dass** ein einziger Türflügel (40) oder zwei Türflügel vorgesehen sind, wobei die zwei Türflügel zum Schließen der Türöffnung (42) aufeinander zu und zum Freigeben der Türöffnung (42) voneinander weg laufen.

10. Schienenfahrzeug oder einen Schienenfahrzeugzug (1) mit wenigstens einem Türmodul nach einem der vorhergehenden Ansprüche.

## Claims

1. A door module (30) to be arranged in a door opening (42) in a wall (2) of a carriage body of a rail vehicle or a train of rail vehicles (1), having
a) at least one door leaf (40) that is able to move in relation to a door opening (42) of a doorway (50) and to be moved by means of a door-leaf drive device (44) between a door-leaf-closed position and a door-leaf-open position, there being between the door-leaf-closed position and the door-leaf-open position a door-leaf-ajar position in which a predetermined clear width of the door opening (42) is exposed by the at least one door leaf (40),
b) a sliding step arrangement (14) to bridge a gap (6) between the rail vehicle (1) and a platform (5) comprising a sliding step (3) that is guided by means of a sliding-step drive device (18) along a sliding-step travel path between a retracted starting position and an extended end position,
c) a platform-sensing device (8) that is designed
c1) according to a first type, so as to detect contact between the sliding step (3) or a tactile element (7) drawn along by the sliding step and the platform (5) as the sliding step (3) moves from the retracted position towards the extended position, and then to generate a detection signal, or
c2) according to a second type, so as to measure contactlessly and independently of the position of the sliding step (3) the distance between the sliding step (3) in the retracted starting position and the platform (5), and to generate a distance signal representing the distance measured,
d) an electronic control device (46) that controls the door-leaf drive device (44) and the sliding-step drive device (18) by means of open- or closed-loop control in such a manner that in response to a door-opening signal sent to the electronic control device (46) the door leaf (40) is moved from the door-leaf-closed position into the door-leaf-open position and the sliding step (3) is moved dependent on the detection signal or the distance signal from the retracted starting position towards the extended position, **characterised in that**
d1) where the platform-sensing device (8) is designed according to the first type, in response to the door opening signal the electronic control device (46) controls the door-leaf drive device (44) and the sliding-step drive device (18) by means of open- or closed-loop control in such a manner that both the movement of the at least one door leaf (40) towards the door-leaf-open position and the movement of the sliding step (3) towards the extended end position are started and the sensor signal is generated before the at least one door leaf (40) assumes the door-leaf-ajar position, and that the at least one door leaf (40) is then moved into its door-leaf-open position, or that
d2) where the platform-sensing device (8) is designed according to the second type, the electronic control device (46) sets a planned extended end position of the sliding step (3) based on the distance signal, and in response to the door-opening signal the door-leaf drive device (44) and the sliding-step drive device (18) are controlled by means of open- or closed-loop control in such a manner that both the movement of the at least one door leaf (40) towards the door-leaf-open position and the movement of the sliding step (3) towards the planned extended end position are started and the at least one door leaf (40) assumes the door-leaf-ajar position and the sliding step (3) assumes the planned extended end position simultaneously, and that the at least one door leaf (40) is then moved into its door-leaf-open position.

2. A door module according to claim 1, **characterised in that**
a) where the platform-sensing device (8) is designed according to the first type, in response to the door-opening signal the electronic control device (46) controls the door-leaf drive device (44) and the sliding-step drive device (18) by means of open- or closed-loop control in such a manner that both the movement of the at least one door leaf (40) towards the door-leaf-open position and the movement of the sliding step (3) towards the extended end position are started and the sensor signal is generated before the at least one door leaf (40) assumes the door-leaf-ajar position at a first door-leaf speed, and that the at least one door leaf (40) is then moved into its door-leaf open position at a second door-leaf speed, or that
b) where the platform-sensing device (8) is designed according to the second type, the electronic control device (46) sets a planned extended end position of the sliding step (3) based on the distance signal, and in response to the door-opening signal the door-leaf drive device (44) and the sliding-step drive device (18) are controlled by means of open- or closed-loop control in such a manner that both the movement of the at least one door leaf (40) towards the door-leaf-open position and the movement of the sliding step towards the planned extended end position are started and the at least one door leaf (40) assumes the door-leaf-ajar position at a first door-leaf speed and the sliding step (3) assumes the planned extended end position simultaneously, and that the at least one door leaf (40) is then moved into its door-leaf-open position.
c) the second door-leaf speed being greater than the first door-leaf speed.

3. A door module according to claim 2, **characterised in that** the second door-leaf speed represents a maximum speed of the at least one door leaf.

4. A door module according to any one of the preceding claims, **characterised in that** with a platform-sensing device (8) of the first type the tactile element (7) drawn along by the sliding step (3) has at least one strip or lever that is mounted rotatably on the sliding step (3) and is rotated on contact with the platform (5), this rotating movement being detected by a sensor element (10) that then emits the detection signal.

5. A door module according to any one of the preceding claims, **characterised in that** with a platform-sensing device (8) of the first type a contact between the sliding step (3) or the tactile element (7) drawn along by it and the platform (5) is detected dependent on a change in at least one of the following values: the current consumed by an electric drive motor in the sliding-step drive device (8), the angular velocity of a rotor of the electric drive motor, a comparison of path-time sections of the extending sliding step (3).

6. A door module according to any one of the preceding claims, **characterised in that** with a platform-sensing device (8) of the second type the electronic control system (46) sets the extended end position of the sliding step (3) based on the distance signal representing the distance measured in such a manner that the extended end position of the sliding step (3) provided corresponds to a position in which the sliding step (3) bridges the distance measured from the sliding step to the platform (5).

7. A door module according to any one of the preceding claims, **characterised in that** in the door-leaf-ajar position the clear width of the door opening (42) exposed by the at least one door leaf (40) is predetermined on the basis of a regulation or a standard.

8. A door module according to any one of the preceding claims, **characterised in that** there is provided a sliding step cassette (11) that can be fastened to the carriage body or a sliding step rack that can be fastened to the carriage body, on which the sliding step (3) runs and in relation to which the sliding step (3) can be retracted or extended

9. A door module according to any one of the preceding claims, **characterised in that** either single door leaf (40) is or two door leaves are provided, the two door leaves running towards one another to close the door opening (42) and away from one another to expose the door opening (42).

10. A rail vehicle or a train of rail vehicles (1) having at least one door module according to any one of the preceding claims.

## Revendications

1. Module (30) de porte à mettre dans une baie (42) de porte d'une paroi (2) d'une caisse d'un véhicule ferroviaire ou d'un train (1) de véhicules ferroviaires, comprenant
a) au moins un vantail (40) de la porte, qui est mobile par rapport à une baie (42) de porte d'un encadrement (50) de porte et qui, à l'aide d'un dispositif (44) d'entraînement du vantail de la porte, est mobile entre une position de fermeture du vantail de la porte et une position d'ouverture du vantail de la porte, dans lequel entre la position de fermeture du vantail de la porte et la position d'ouverture du vantail de la porte, il y a une position d'ouverture limite du vantail de la porte, dans laquelle une largeur libre de la baie (42) de porte est dégagée par le au moins un vantail (40) de la porte,
b) un agencement (14) à marchepied coulissant pour ponter un intervalle (6) entre le véhicule (1) ferroviaire et un quai (5), qui comprend un marchepied (3) coulissant guidé à l'aide d'un dispositif (18) d'entraînement de marchepied coulissant, le long d'un trajet de déplacement du marchepied coulissant, entre une position initiale escamotée et une position finale déployée,
c) un dispositif (8) de détection de quai, qui est constitué de manière
c1) à détecter, suivant une première façon, au cours du déplacement du marchepied (3) coulissant de la position escamotée en direction de la position déployée, un contact avec le quai (5) du marchepied (3) coulissant ou d'un élément (7) tactile entraîné avec le marchepied coulissant et à en produire un signal de détection, ou en ce que
c2) à détecter, sans contact, indépendamment de la position du marchepied (3) coulissant, suivant une deuxième façon, la distance entre le marchepied (3) coulissant dans la position initiale escamotée et le quai (5) et à produire un signal de distance représentant la distance détectée
d) un dispositif (46) électronique de commande, qui commande ou règle le dispositif (44) d'entraînement du vantail de la porte et le dispositif (18) d'entraînement du marchepied, de manière à ce que, sur un signal d'ouverture de la porte, entré dans le dispositif (46) électronique de commande, le vantail (40) de la porte se déplace de la position de fermeture du vantail de la porte à la position d'ouverture du vantail de la porte et, en fonction du signal de détection ou en fonction du signal de distance, le marchepied (3) coulissant se déplace de la position initiale escamotée en direction de la position déployée, **caractérisé en ce que**
d1) dans le cas où le dispositif (8) de détection du quai est constitué suivant la première façon, le dispositif (46) électronique de commande commande ou règle le dispositif (44) d'entraînement du vantail de la porte et le dispositif (18) d'entraînement du marchepied coulissant sur le signal d'ouverture de la porte, de manière à ce que le déplacement du au moins un vantail (40) de la porte, en direction de la position d'ouverture du vantail de la porte, commence, ensemble avec le déplacement du marchepied (3) coulissant, en direction de la position finale déployée et produise le signal de détection avant que la position d'ouverture limite du vantail de la porte soit atteinte par le au moins un vantail (40) de la porte et **en ce qu'**ensuite, le au moins un vantail (40) de la porte soit mis dans sa position d'ouverture du vantail de la porte, ou **en ce que**
d2) dans le cas où le dispositif (8) de détection du quai et constitué suivant la deuxième façon, le dispositif (46) électronique de commande détermine, à partir du signal de distance, une position finale déployée prévue du marchepied (3) coulissant, et commande ou règle le dispositif (44) d'entraînement du vantail de la porte et le dispositif (18) d'entraînement du marchepied coulissant sur le signal d'ouverture de la porte, de manière à faire commencer le déplacement du au moins un vantail (40) de la porte en direction de la position d'ouverture du vantail de la porte, ensemble avec le déplacement du marchepied (3) coulissant, en direction de la position finale déployée prévue, et à ce que soient prises, en même temps, la position d'ouverture limite du vantail de la porte par le au moins un vantail (40) de la porte et la position finale déployée prévue par le marchepied (3) coulissant et **en ce qu'**ensuite le au moins un vantail (40) de la porte est déplacé vers sa position d'ouverture du vantail de la porte.

2. Module de porte suivant la revendication 1, **caractérisé en ce que**
a) dans le cas où le dispositif (8) de détection du quai est constitué suivant la première façon, le dispositif (46) électronique de commande commande ou règle le dispositif (44) d'entraînement du vantail de la porte et le dispositif (18) d'entraînement du marchepied coulissant sur le signal d'ouverture de la porte, de manière à faire commencer le déplacement du au moins un vantail (40) de la porte en direction de la position d'ouverture du vantail de la porte, ensemble avec le déplacement du marchepied (3) coulissant en direction de la position finale déployée et à produire le signal de détection avant que la position d'ouverture limite du vantail de la porte soit prise par le au moins un vantail (40) de la porte à une première vitesse du vantail de la porte, et **en ce qu'**ensuite au moins un vantail (40) de la porte soit déplacé à une deuxième vitesse du vantail de la porte vers sa position d'ouverture du vantail de la porte, ou **en ce que**
b) dans le cas où le dispositif (8) de détection du quai est constitué suivant la deuxième façon, le dispositif (46) électronique de commande détermine, à partir du signal de distance, la position finale déployée prévue du marchepied (3) coulissant et commande ou règle le dispositif (44) d'entraînement du vantail de la porte et le dispositif (18) d'entraînement du marchepied coulissant sur le signal d'ouverture de la porte, de manière à faire commencer le déplacement du au moins un vantail (40) de la porte en direction de la position d'ouverture du vantail de la porte, ensemble avec le déplacement du marchepied (3) coulissant, en direction de la position finale déployée prévue, et de manière à ce que soient prises, en même temps, la position de l'ouverture limite du vantail de la porte à une première vitesse du vantail de la porte par le au moins un vantail (40) de la porte et la position finale déployée prévue par le marchepied (3) coulissant et de manière à ce qu'ensuite le au moins un vantail (40) de la porte soit déplacé vers sa position d'ouverture du vantail de la porte à une deuxième vitesse du vantail de la porte, dans lequel
c) la deuxième vitesse du vantail de la porte est plus grande que la première vitesse du vantail de la porte.

3. Module de porte suivant la revendication 2, **caractérisé en ce que** la deuxième vitesse du vantail de la porte représente la vitesse la plus grande du au moins un vantail de la porte.

4. Module de porte suivant l'une des revendications précédentes, **caractérisé en ce que**, pour un dispositif (8) de détection du quai de la première façon, l'élément (7) tactile entraîné par le marchepied (3) coulissant a au moins, monté tournant sur le marchepied (3) coulissant, une baguette ou un levier, qui tourne par contact avec le quai (5) et le mouvement de rotation est détecté au moyen d'un élément (10) de capteur, qui produit, en outre, le signal de détection.

5. Module de porte suivant l'une des revendications précédentes, **caractérisé en ce que**, pour un dispositif (8) de détection du quai de la première façon, un contact avec le quai (5) du marchepied (3) coulissant ou de l'élément (7) tactile entraîné avec lui est détecté en fonction d'une variation d'au moins l'une des grandeurs suivantes : le courant électrique consommé par le moteur électrique d'entraînement du dispositif (8) d'entraînement de la marche du marchepied coulissant, la vitesse angulaire d'un rotor ou du rotor d'entraînement électrique, une comparaison de segment trajet-temps du marchepied (3) coulissant en déploiement.

6. Module de porte suivant l'une des revendications précédentes, **caractérisé en ce que**, pour un dispositif (8) de détection du quai de la deuxième façon, le dispositif (46) électronique de commande détermine, à partir du signal de distance représentant la distance détectée, la position finale déployée prévue du marchepied (3) coulissant, de manière à ce que la position finale déployée prévue du marchepied (3) coulissant corresponde à une position, dans laquelle le marchepied (3) coulissant ponte la distance détectée du marchepied coulissant au quai (5).

7. Module de porte suivant l'une des revendications précédentes, **caractérisé en ce que**, dans la position d'ouverture limite du vantail de la porte, la largeur libre, dégagée par le au moins un vantail (40) de la porte de la baie (42) de porte, est prescrite sur la base d'une prescription ou d'une norme.

8. Module de porte suivant l'une des revendications précédentes, **caractérisé en ce qu'**il est prévu une cassette (11) de marchepied coulissant pouvant être fixée à la caisse ou un bâti de marchepied coulissant pouvant être fixé à la caisse, où le marchepied (3) coulissant est guidé et par rapport auquel le marchepied (3) coulissant peut entrer et sortir.

9. Module de porte suivant l'une des revendications précédentes, **caractérisé en ce qu'**il est prévu un vantail unique (40) de la porte ou deux vantaux de la porte, se rapprochant l'un de l'autre pour la fermeture de la baie (42) de la porte et s'éloignant l'un de l'autre pour dégager la baie (42) de porte.

10. Véhicule ferroviaire ou train (1) de véhicule ferroviaire ayant au moins un module de porte suivant l'une des revendications précédentes.
